# EUROPEAN PATENT SPECIFICATION

(11) **EP 1 069 460 B1**
(45) Date of publication and mention of the grant of the patent: **09.04.2003**
(21) Application number: 00902021.5
(22) Date of filing: 31.01.2000
(51) Int. Cl.: G02F 1/1335, G09F 9/30

(54) **REFLECTIVE LCD DEVICE AND METHOD OF MANUFACTURE THEREOF**
REFLEKTIERENDE FLÜSSIGKRISTALLANZEIGEVORRICHTUNG UND DEREN HERSTELLUNGSVERFAHREN
DISPOSITIF REFLECHISSANT A CRISTAUX LIQUIDES ET PROCEDE DE FABRICATION CORRESPONDANT

(30) Priority: 29.01.1999 JP 2153999
(43) Date of publication of application: 17.01.2001
(73) Proprietor: Citizen Watch Co. Ltd., Tokyo 188-8511 (JP)
(72) Inventor: AKIBA, Yuichi, Citizen Watch Co., Ltd, Tokorozawa-shi, Saitama 359-8511 (JP)
(74) Representative: Prüfer, Lutz H., Dipl.-Phys.
(86) International application number: JP0000519
(87) International publication number: WO00045215

(56) References cited:
- JP-A- 6 313 890
- JP-A- 7 287 115
- JP-U- 49 039 443
- PATENT ABSTRACTS OF JAPAN vol. 1997, no. 05, 30 May 1997 (1997-05-30) & JP 09 015418 A (TOPPAN PRINTING CO LTD), 17 January 1997 (1997-01-17)
- PATENT ABSTRACTS OF JAPAN vol. 018, no. 510 (P-1804), 26 September 1994 (1994-09-26) & JP 06 174916 A (TOSHIBA CORP;OTHERS: 01), 24 June 1994 (1994-06-24)
- PATENT ABSTRACTS OF JAPAN vol. 1997, no. 02, 28 February 1997 (1997-02-28) & JP 08 254696 A (SHARP CORP), 1 October 1996 (1996-10-01)
- KUO C -L ET AL: "8.1: A 10.4-IN. REFLECTIVE MTN-MODE TFT-LCD WITH VIDEO-RATE AND FULL-COLOR CAPABILITIES" SID INTERNATIONAL SYMPOSIUM DIGEST OF TECHNICAL PAPERS,US,SANTA ANA, SID, vol. 28, 13 May 1997 (1997-05-13), pages 79-82, XP000722662 ISSN: 0097-966X
- PATENT ABSTRACTS OF JAPAN vol. 1996, no. 08, 30 August 1996 (1996-08-30) & JP 08 101385 A (TOPPAN PRINTING CO LTD), 16 April 1996 (1996-04-16)
- PATENT ABSTRACTS OF JAPAN vol. 1995, no. 10, 30 November 1995 (1995-11-30) & JP 07 181312 A (TOSHIBA CORP), 21 July 1995 (1995-07-21)

## Description

### TECHNICAL FIELD

This invention relates to a reflection-type liquid crystal display device which uses natural light as a light source and selectively reflects incident natural light by a reflection film to perform a display and a fabricating method thereof.

### BACKGROUND TECHNOLOGY

A reflection-type liquid crystal display device is a liquid crystal display device using natural light as a light source and does not need a light source such as a backlight, and is composed of a liquid crystal layer, a pair of transparent insulating substrates holding the liquid crystal layer therebetween, a polarizing film, a metal reflection plate (or film), and the like.

A conventional twisted nematic (TN) or super twisted nematic (STN) liquid crystal display device needs two polarizing films, whereby 3/4 of natural light is lost, resulting in a dark display.

Further, the metal reflection plate must be positioned outside the polarizing films, in other words, it must be disposed outside the insulating substrate, and thus there occurs a problem that when light is made incident from a slanting direction on the reflection-type liquid crystal display device, reflected light which is recognized as an image delivers double images on a surface on the liquid crystal layer side of one insulating substrate and on a surface of the metal reflection plate. Moreover, since a pixel through which the incident light passes and a pixel through which the reflected light passes are different, there are problems that contrast is lowered and that when a color display is performed using a color filter, a mixture of colors occurs, resulting in deterioration in color reproduction.

To solve these problems, a TN or STN liquid crystal display device capable of display with one polarizing film and a guest-host liquid crystal display device of a phase-transition type capable of display without using any polarizing films are proposed. In either case, the polarizing films can be reduced in number or may not be used, thereby making a display brighter.

Further, the metal reflection plate can be provided on the liquid crystal layer side of one insulating substrate, and thus it is possible to solve the aforesaid problems of double images, decrease in contrast, color mixture of the color filters and the like.

Furthermore, if a black matrix is provided between adjacent pixels, light which is made incident between the pixels where the light is never modulated can be absorbed by the black matrix, thereby making it possible to obtain an excellent black display and thus contrast can be improved.

However, a conventional black matrix must be formed by patterning metal chromium, chromium oxide, or a black resin between adjacent pixels with high accuracy.

Moreover, generally used as a material for a metal reflection plate or film is a metal film of aluminum, silver, or an alloy of them with which a high reflectance can be obtained.

However, it is known that these metal films are susceptible to an alkali solution, and if in contact with the alkali solution, the films corrode.

JP-A-9-15418 discloses a reflection-type liquid crystal display device, wherein a light absorbing layer made of chromium or chromium oxide is provided on a glass substrate, a light reflection film made of aluminum or silver is provided on the light absorbing layer, and colour filter (pixel) layers are provided on the light reflection film with a gap therebetween. The light absorbing layer is exposed by etching the light reflection film using the colour filter layers as an etching mask, and the exposed light absorbing layer is used as black matrix.

JP-A-6-174916 discloses the provision of a colour filter as follows: A metallic aluminium film is formed on a transparent substrate, then the metallic aluminium film is subjected to an anodic oxidation treatment in order to form an aluminum oxidised film having a large number of pores on the substrate, and thereafter a light shielding layer and a coloured layer, which is a colour filter, are provided successively on the aluminum anodically oxidised film.

Therefore, there is a problem that when the reflection-type liquid crystal display device is fabricated, the metal reflection film made of a metal film is corroded and removed since the alkali solution is used in the step of developing the color filter layer in the fabrication process of forming the color filter layer on the metal reflection film.

This invention is made to solve the aforesaid problems in the conventional reflection-type liquid crystal display device. Objects thereof are to provide a bright display by using only one polarizing film, to enable an excellent black display and a display with excellent contrast by giving a function which is equal to that of the black matrix without necessity of patterning of the light absorbing layer, and to prevent the metal reflection film from being corroded and removed when the color filter is formed on the metal reflection film.

### DISCLOSURE OF THE INVENTION

To attain the aforesaid objects, this invention provides a reflection-type liquid crystal display device with the following structure and a fabricating method thereof.

The reflection-type liquid crystal display device according to this invention is a reflection-type liquid crystal display device, in which a first substrate composed of an insulating transparent substrate and a second substrate composed of an insulating substrate are opposed to each other with a liquid crystal layer therebetween, a transparent first electrode is provided on the liquid crystal layer side of the first substrate and a transparent second electrode is provided on the liquid crystal layer side of the second substrate respectively, a color filter layer is provided on the liquid crystal layer side of the first substrate or the second substrate, a metal reflection film is provided between the second substrate and the color filter, a polarizing film is disposed on the opposite side of the first substrate to the liquid crystal layer, and a region where the first electrode and the second electrode overlap in a plane view becomes a pixel, is characterized by the following points.

The points are that the metal reflection film is disposed with a gap between adjacent pixels, that a conductive light absorbing layer electrically connecting with the metal reflection film is provided between the second substrate and the metal reflection film, and that a transparent anodic oxide film is provided on the entire surface including the side faces of the metal reflection film.

It is preferable that the metal reflection film is provided only within a region to be a pixel. It is possible that the metal reflection film is made of aluminum or an aluminum alloy and the conductive light absorbing layer is made of chromium film.

Further, a fabricating method of a reflection-type liquid crystal display according to this invention comprises the following steps.

The steps are:
forming a large number of transparent first electrodes in stripe forms on one face of a first substrate composed of an insulating transparent substrate at predetermined gaps;
providing a conductive light absorbing layer on the entire face of at least a display region of one face of a second substrate composed of an insulating substrate;
providing a metal reflection film layer on the entire face on the top of the light absorbing layer;
patterning the metal reflection film layer to form a large number of metal reflection films with gaps provided at least between adjacent pixels;
performing anodic oxidation processing for a surface of each of the metal reflection films using the conductive light absorbing layer as a common electrode to form a transparent anodic oxide film;
providing a color filter layer respectively on each metal reflection film on which the anodic oxide film is formed;
forming a transparent over coat film on the color filter layer;
forming a large number of transparent second electrodes in stripe forms at positions each aligned with the metal reflection films on the over coat film at predetermined spaced gaps;
bonding the first substrate and the second substrate together with the first electrodes and the second electrodes being opposed to each other to intersect each other in a plane view within a region where each of the metal reflection films is provided and a gap being provided therebetween and sealing a liquid crystal layer in the gap; and
disposing a polarizing film on a face on the opposite side of the first substrate to the liquid crystal layer.

In the fabricating method of this reflection-type liquid crystal display device,
it is suitable that in the step of forming the metal reflection films, the metal reflection films are formed such that the films are divided into plural pieces per each pixel region with gaps therebetween, and in the step of providing the color filter layer, color filter layers of different colors are provided respectively to the plurality of metal reflection films in the same pixel region.

Further, it is suitable that in the step of providing the conductive light absorbing layer, a chromium film is provided as the light absorbing layer. It is suitable that in the step of providing the metal reflection film layer, an aluminum layer or an aluminum alloy layer is provided as the metal reflection film layer.

In the reflection-type liquid crystal display device according to the invention, the metal reflection films are provided in each pixel portion, the light absorbing layer is provided on the opposite side of the metal reflection films to the liquid crystal layer, that is, on the entire face on the rear of the metal reflection films, and the light absorbing layer exists also within the gaps between the metal reflection films of the adjacent pixels.

Accordingly, light made incident on the reflection-type liquid crystal display device reaches the metal reflection film and is reflected at the pixel portion, and thus the light does not reach the light absorbing layer. Meanwhile, light made incident reaches the light absorbing layer and is absorbed at the gap between the adjacent pixels.

Therefore, even if the light absorbing layer is not patterned with high accuracy between the pixels, the light absorbing layer functions in the same manner as a black matrix at the gaps between the pixels, thereby obtaining an excellent black display and also a display with high contrast.

Further, when the metal reflection films are formed only in the pixel portions, incident light is absorbed by the light absorbing layer at all the peripheries of the pixel portions, whereby a better black display can be obtained.

Furthermore, in the reflection-type liquid crystal display device according to this invention, a transparent anodic oxide film is provided between the metal reflection film and the color filter layer.

Accordingly, in the fabrication process of forming the color filter layer on the top face of the metal reflection film, the metal reflection film is protected by the anodic oxide film in the step of developing the color filter layer using an alkali solution, thereby preventing corrosion of the metal reflection film by the alkali solution, so that removal of the metal reflection film never occurs.

Further, by the fabricating method of the reflection-type liquid crystal display device according to this invention, the anodic oxide film is formed by performing anodic oxidation processing for the surface of the metal reflection film with the conductive light absorbing layer which is electrically connected to each metal reflection film as a common electrode.

Accordingly, even if each metal reflection film is disposed with gaps provided between adjacent pixels and forms an isolated pattern corresponding to each pixel portion, an anodic oxidation voltage can be supplied to all the metal reflection films with the conductive light absorbing layer which is provided between the second substrate and the metal reflection films as a common electrode and the metal oxide films can be formed on the entire surfaces of the metal reflection films including side faces, whereby corrosion from the side faces of the metal reflection films can also be prevented.

### BRIEF DESCRIPTION OF DRAWINGS

FIG. 1 is a schematic sectional view showing part of an embodiment of a reflection-type liquid crystal display device according to this invention;
FIG. 2 is a plane view showing plane positional relations between a light absorbing layer, first electrodes, second electrodes, and metal reflection films in FIG. 1;
FIG. 3 to FIG. 6 are sectional views showing fabrication processes of the reflection-type liquid crystal display device shown in FIG. 1 in due order;
FIG. 7 is a plane view showing a plane positional relation between the light absorbing layer and the metal reflection films in FIG. 6;
FIG. 8 is a sectional view showing an anodic oxidation process of forming anodic oxide films on surfaces of the metal reflection films shown in FIG. 6; and
FIG. 9 to FIG. 12 are sectional views showing respective fabrication processes subsequent to FIG. 8 in due order.

### BEST MODE FOR CARRYING OUT THE INVENTION

Hereinafter, best modes of a reflection-type liquid crystal display device according to this invention and a fabricating method thereof will be explained with reference to the drawings.

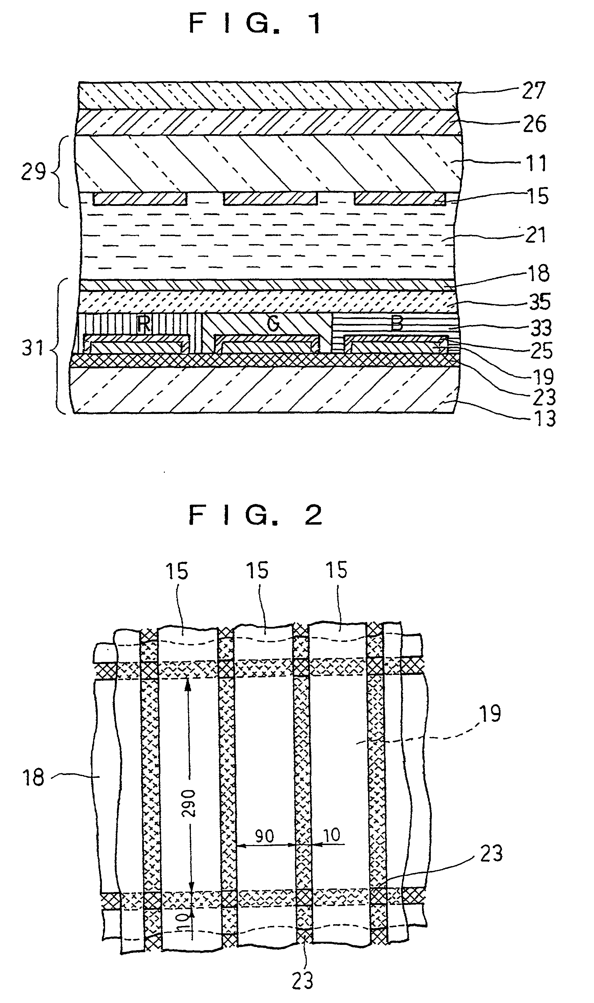

### Reflection-type liquid crystal display device: FIG. 1 and FIG. 2

First, the structure of an embodiment of the reflection-type liquid crystal display device according to this invention will be explained with reference to FIG. 1 and FIG. 2.

FIG. 1 is a schematic sectional view showing part of the reflection-type liquid crystal display device, and FIG. 2 is a plane view showing plane positional relations between a light absorbing layer, first electrodes, second electrodes, and metal reflection films in FIG. 1.

In the reflection-type liquid crystal display device of this embodiment, as shown in FIG. 1, a first substrate 11 composed of a glass substrate that is an insulating transparent substrate and a second substrate 13 composed of an insulating substrate are opposed to each other with a liquid crystal layer 21 therebetween, and transparent first electrodes 15 are provided on the liquid crystal layer 21 side of the first substrate 11 and transparent second electrodes 18 are provided on the liquid crystal layer 21 side of the second substrate 13 respectively. Incidentally, the second substrate 13 may not be a transparent substrate.

The liquid crystal layer 21 is composed of a super twisted nematic liquid crystal aligned at a twist angle of 240° and sealed between an upper substrate 29 and a lower substrate 31 of which peripheries are bonded together with a sealing material not shown. The upper substrate 29 is composed of the first substrate 11 and the first electrodes 15, and the lower substrate 31 is composed of the second substrate 13 and the second electrodes 18 and additionally a light absorbing layer 23, metal reflection films 19, transparent anodic oxide films 25, color filter layers 33, and an over coat layer 35 which will be described later.

The conductive light absorbing layer 23 made of chromium film is provided on the entire face of at least a display region of a face on the liquid crystal layer 21 side of the second substrate 13, and the metal reflection films 19 made of an aluminum film are provided on a face on the liquid crystal layer 21 side of the light absorbing layer 23. Pattern forms of the metal reflection films 19 form a large number of isolated rectangular patterns with a long side length of 290 µm, a short side length of 90 µm, and a spaced gap of 10 µm as shown by broken lines in FIG. 2.

Three metal reflection films 19 are provided to a region of each pixel portion (a square region of 290 µm × 290 µm), gaps of 10 µm are provided between metal reflection films 19 and between adjacent pixels, and the light absorbing layer exists in each gap (shown by cross-hatching in FIG. 2). Further, all of the metal reflection films 19 are electrically connected by the conductive light absorbing layer.

Furthermore, on the surface on the liquid crystal layer 21 side of each metal reflection film 19, the transparent anodic oxide film (metal oxide film) 25 that is an aluminum oxide film formed by anodic oxidation processing of aluminum film is provided.

Moreover, the color filter layer 33 is provided on each of the metal reflection films 19. This color filter layer 33 is formed so that a color filter of a different color is arranged to each of the metal reflection films 19 in one pixel region. In an example shown in FIG. 1, the color filter layers 33 in which a red color filter R, a green color filter G, and a blue color filter B are arranged from the left in order without gap in relation to three metal reflection films 19 provided in one pixel region are provided.

The color filter layers 33 are formed so that the top faces thereof become a flat face, the transparent over coat film 35 is provided on the top faces (faces on the liquid crystal layer 21 side), and the transparent second electrodes 18 are provided on the face on the liquid crystal layer 21 side of the transparent over coat film 35. The second electrodes 18 are formed in a plurality of stripe-form patterns each having a width of 290 µm at spaced gaps of 10 µm at positions aligned with the short side of each metal reflection film 19 on the light absorbing layer 23 as shown in FIG. 2.

Regions where the first electrodes 15 of the upper substrate 29 and the second electrodes 18 of the lower substrate 31 intersect correspond to regions where each metal reflection film 19 is provided, and a pixel portion is formed by the intersecting portion. In this example, a square region of 290 µm × 290 µm where three metal reflection films 19 and the color filter layers 33 of three colors (R, G, and B) are provided corresponding to each other forms one pixel.

Further, a polarizing film 27 is provided on the opposite side (the visible side) of the first substrate 11 to the liquid crystal layer 21. Furthermore, a retardation plate 26 is provided between the first substrate 11 and the polarizing film 27 in this example to prevent coloring due to birefringence effects of the liquid crystal layer 21, but this retardation plate 26 is not necessary.

In this reflection-type liquid crystal display device, a voltage applied between the first electrodes 15 and the second electrodes 18 is changed (ON/OFF) at the pixel portions where the first electrodes 15 and the second electrodes 18 intersect to thereby drive the liquid crystal layer 21 so as to phase-modulate light passing therethrough.

By combination of a phase modulation amount in the liquid crystal layer 21 and polarization action by the polarizing film 27, emission of light which is made incident on this reflection-type liquid crystal display device from the upper side in FIG. 1 that is the visible side, passes through the liquid crystal layer 21 and the color filter layer 33, and is reflected by the metal reflection film 19, is switched to perform a display in colors and black.

Meanwhile, light which has reached the gap between adjacent pixels is absorbed by the light absorbing layer 23, thereby always bringing the gap between the adjacent pixels into a black state regardless of the phase modulation of the liquid crystal layer 21.

Accordingly, when a black display is performed at the pixel portion, all of the surroundings of the pixel are also black, so that an excellent black display can be obtained.

As described above, in the reflection-type liquid crystal display device of this embodiment, even if not patterned with high accuracy between pixels, the light absorbing layer 23 is allowed to function as a black matrix, whereby an excellent black display and a color display with good contrast and without mixture of colors can be performed. More than that, it is sufficient to use only one polarizing film 27, thereby enabling a bright display.

Further, since the anodic oxide films 25 are formed on the surfaces of the metal reflection films 19, the surfaces of the metal reflection films 19 are never corroded by an alkali developing solution nor removed in a developing process of the color filter layers 33, resulting in a highly reliable reflection-type liquid crystal display device.

Though each metal reflection film 19 is formed only in the pixel portion so that gaps are provided at all of the surroundings of each pixel portion, that is, all portions between adjacent pixels in this embodiment, but the reflection-type liquid crystal display device of this invention is not limited to this, each metal reflection film 19 may be disposed so that a gap is provided at least at one portion between adjacent pixels.

For example, it is also suitable that the metal reflection films 19 are shaped into the same form as the stripe-form patterns of the first electrodes 15 and are placed so that a gap is provided between two pixels adjacent to each other in a width direction. The more gaps there are between adjacent pixels, the more regions there are in a black state regardless of phase modulation of the liquid crystal layer 21, thereby obtaining a better black display.

It should be noted that though the color filter layers 33 are provided at the lower substrate 31 side in the aforesaid embodiment, they may be provided at the upper substrate 29 side, that is, on a face on the liquid crystal layer 21 side of the first substrate 11.

In that case, the over coat film 35 made of transparent resin is provided on the entire face on the liquid crystal layer 21 side of the color filter layers 33, and the first electrodes 15 in stripe forms are provided on the surface of the over coat film 35.

Further, in the lower substrate 31, it is suitable to provide a transparent resin film in place of the color filter layers 33 on the light absorbing film 23 and the metal reflection films 19 on which the anodic oxide films 25 are formed, on the liquid crystal layer 21 side of the second substrate 13 and to provide the second electrodes 18 in stripe forms on the surface of the transparent resin film.

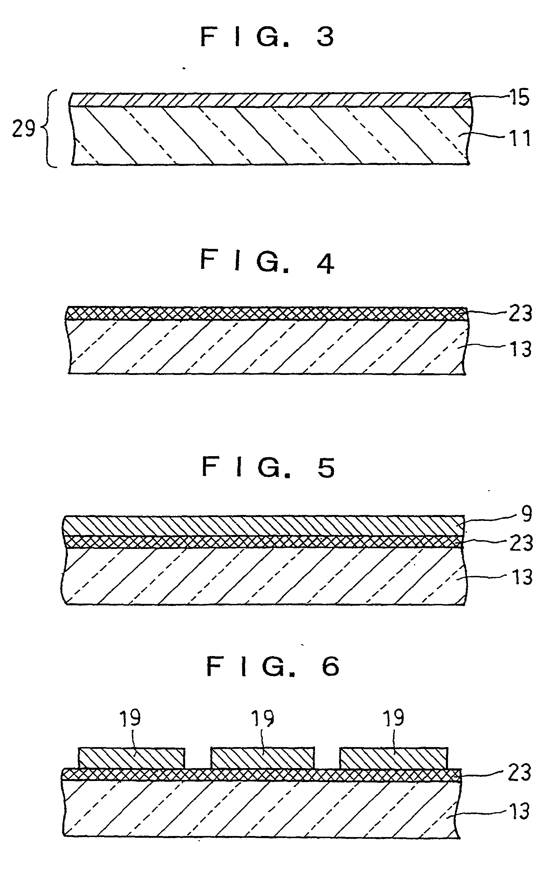

### Fabricating method of reflection-type liquid crystal display device: FIG. 3 to FIG. 12

Next, the fabricating method of the above-described reflection-type liquid crystal display device will be explained with reference to FIG. 3 to FIG. 12.

First, a transparent conductive film made of indium tin oxide film is film-formed on one face of the first substrate 11 that is a transparent glass substrate shown in FIG. 3 to have a film thickness of 110 nm by the sputtering method. Next, a positive-type photoresist is applied on the entire face of the transparent conductive film by spin coating, and photography processing by exposure processing and developing processing using a photomask is performed, whereby the photoresist is formed into the pattern forms of the first electrodes 15.

Thereafter, patterning by etching processing is performed using the photoresist for an etching mask to form a plurality of first electrodes 15.

The etching processing of the transparent conductive film made of indium tin oxide film is performed by wet etching processing using a mixed solution of ferric chloride and hydrochloric acid. Then, the photoresist used as the etching mask is removed by a wet removal method using a resist removing solution, for example, N-320 (trade name) manufactured by Nagase & Co., Ltd.

The pattern forms of the first electrodes 15 are a large number of stripe-form patterns with a width of 90 µm and a spaced gap of 10 µm as shown in FIG. 2.

An alignment film (not shown) is formed to cover the tops of the first electrodes 15 to thereby form the upper substrate 29.

Meanwhile, in the lower substrate 31, the conductive light absorbing layer 23 made of chromium film is formed to have a film thickness of 200 nm by the sputtering method at least on the entire face of the display region of one face of the second substrate 13 composed of an insulating substrate as shown in FIG. 4.

Subsequently, an aluminum film 9 is formed to have a film thickness of 200 nm as a metal reflection film layer on the light absorbing layer 23 by the sputtering method as shown in FIG. 5.

Further, a positive-type photoresist is applied on the entire top face of the aluminum film 9 by spin coating, and photolithography processing by exposure processing and development processing using a photomask is performed to pattern the photoresist into the pattern forms of the metal reflection films 19.

Thereafter, patterning is performed by the etching processing of the aluminum film through use of the photoresist as an etching mask to form many metal reflection films 19 as shown in FIG. 6.

The etching process of the aluminum film is performed by wet etching using a mixed solution of phosphoric acid, nitric acid, and acetic acid. In this etching process, the light absorbing layer 23 made of chromium film composing the light absorbing layer 23 is exposed within a region in which the metal reflection film layer made of aluminum film is etched, and the chromium film of the light absorbing layer 23 is not etched by the aforesaid mixed solution.

Accordingly, the light absorbing layer 23 is exposed in the gaps between the metal reflection films 19 which are formed in a plurality of isolated rectangular patterns.

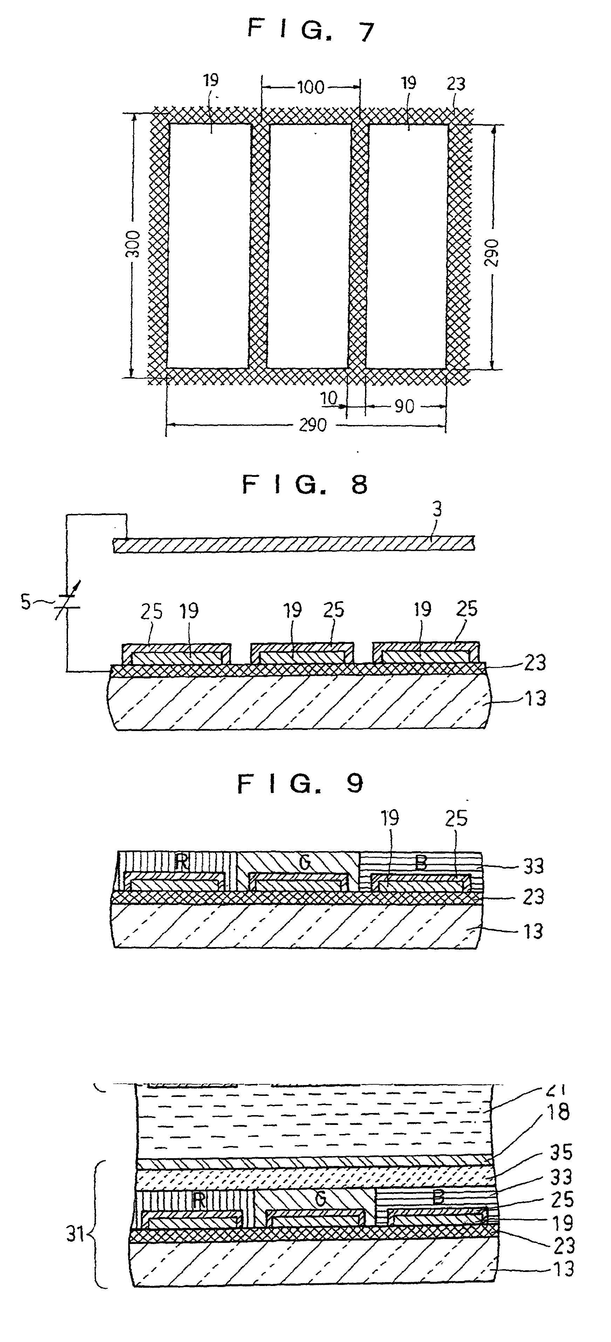

The pattern forms of the metal reflection films 19 are formed into a plurality of isolated rectangular patterns with a long side length of 290 µm, a short side length of 90 µm, and a spaced gap of 10 µm as shown in FIG. 7. These three metal reflection films 19 correspond to each region of three primary colors composing one pixel for a color display.

Thereafter, the photoresist which has been used as an etching mask is removed by the wet removal method using a resist removing solution, for example, N-320 (trade name) manufactured by Nagase & Co., Ltd.

Next, as shown in FIG. 8, anodic oxidation processing using an ammonium phosphate solution as an anodic oxidizing solution is performed for the surfaces of the metal reflection films 19 made of aluminum film with the conductive light absorbing layer 23 made of chromium film as a common electrode.

The metal reflection films 19 here are formed in a plurality of isolated rectangular patterns, and each metal reflection film 19 is individually electrically connected to the conductive light absorbing layer 23 made of chromium film, so that the transparent anodic oxide film 25 made of aluminum oxide film can be formed on the surface on the metal reflection film 19 made of an aluminum film to cover the entire surface including side faces of the metal reflection film 19 with the light absorbing layer 23 as a common electrode.

At this time, an anodic oxidation voltage which is applied between the conductive light absorbing layer 23 and opposed electrodes 3 is set at a voltage of 40V by a direct current variable power source 5 and the voltage is raised at a speed of 1.5V/min. from 0V, and anodic oxidation processing is performed for one hour at the set voltage after the voltage reaches the set voltage, thereby forming the anodic oxide film 25 with a film thickness of 50 nm.

Next, a pigment-dispersed type of red color resist V-259R (trade name) with photosensitivity manufactured by Nippon Steel Chemical Co., Ltd. is applied by the spin coating on the metal reflection films 19 of which the entire surfaces are covered with the transparent anodic oxide films 25 to have a film thickness of 1.2 µm and subjected to exposure processing using a photomask.

Then, the portion which has been subjected to developing processing by the alkali developing solution and exposed becomes insoluble to the developing solution, and the red color filter R of the color filter layers 33 shown in FIG. 9 is formed by patterning so as to cover every one of three metal reflection films 19 in each pixel region.

Further, firing is performed for two hours within a temperature range of 220°C to 240°C, thereby thermally curing the red color resist composing the red color filter R and gasifying unreacted substances which are not involved in light curing nor heat curing contained in the red color resist, to remove them.

Thereafter, a green color filter G and a blue color filter B are similarly formed by patterning in order using a green color resist and a blue color resist respectively so as to cover different one of three metal reflection films 19 in each pixel region.

As described above, the color filter layers 33 composed of the red color filter R, the green color filter G, and the blue color filter B are formed as shown in FIG. 9.

The pattern forms of each of the color filters R, G, and B of the color filter layers 33 are a plurality of isolated rectangular patterns each of which is larger in size than the metal reflection film 19, more specifically, a long side length of 300 µm and a short side length of 100 µm. Further, each rectangular pattern is formed such that the center thereof corresponds to the center of each metal reflection film 19 and the long side and the short side thereof are respectively parallel to the long side and the short side of the rectangular pattern of the metal reflection film 19 which is formed in each pixel portion.

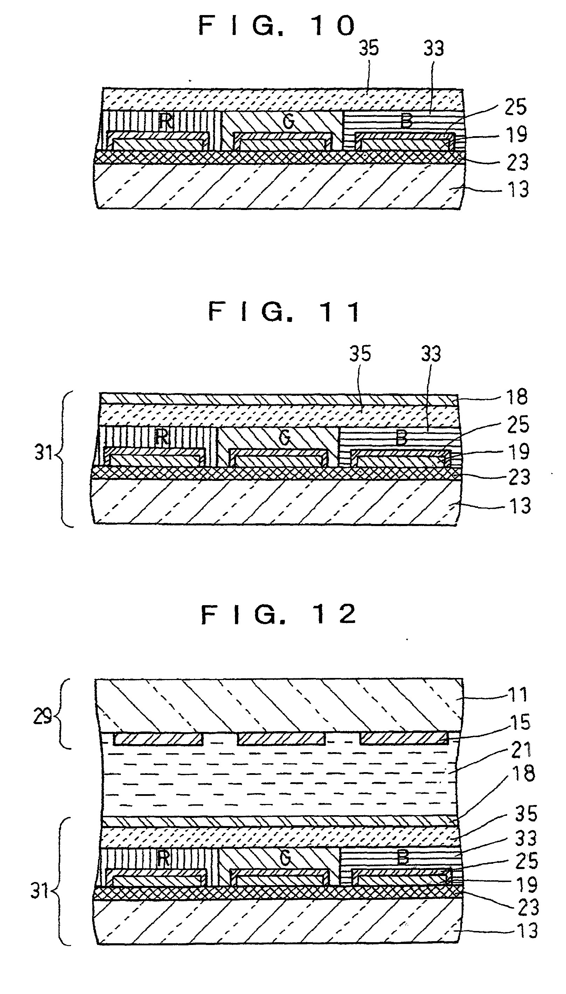

Next, Optoma SS 6777 (trade name) manufactured by JSR is formed on the color filter layers 33 as the transparent over coat film 35 as shown in FIG. 10 by spin coating. The over coat film 35 is formed to have a film thickness of 3 µm.

Thereafter, firing is performed for two hours within a temperature range of 220°C to 240°C, thereby thermally curing the over coat film 35 and gasifying unreacted substances which are not involved in heat curing, to remove them. The over coat film 35 performs the function of improving the color filter layers 33 in chemical resistance, sputtering resistance, and flatness.

Further, a transparent conductive film made of indium tin oxide film is formed on the over coat film 35 by the sputtering method to have a film thickness of 110 nm.

Subsequently, a positive-type photoresist is applied on the entire face of the transparent conductive film by spin coating, and photolithography processing by exposure processing and development processing using a photomask is performed to form the photoresist into the pattern forms of the second electrodes 18.

Thereafter, patterning of the transparent conductive film is performed using the photoresist for an etching mask, thereby forming the second electrodes 18 shown in FIG. 11.

The etching processing of the transparent conductive film is performed by the wet etching processing using a mixed solution of ferric chloride and hydrochloric acid. Thereafter, the photoresist used as the etching mask is removed by the wet removal method using a resist removing solution.

The pattern forms of the second electrodes 18 are a plurality of stripe patterns with a width of 290 µm and a spaced gap of 10 µm, and are formed so that the long side thereof and the short side of the rectangular pattern of the metal reflection film 19 overlap each other in parallel.

Furthermore, an alignment film (not shown) is formed so as to cover the tops of the second electrodes 18, thereby forming the lower substrate 31.

Thereafter, the upper substrate 29 and the lower substrate 31 which are made as described above are arranged so that the first electrodes 15 on the first substrate 11 and the second electrodes 18 on the second substrate 13 are opposed to each other as shown in FIG. 1, and the stripe-form pattern of the first electrodes 15 and the stripe-form pattern of the second electrodes 18 are orthogonal to each other and the long side of the stripe-form pattern of the first electrodes 15 and the long side of the rectangular pattern of each of the metal reflection films 19 overlap each other in parallel as shown in FIG. 2. By the above arrangement, a pixel portion is formed at a portion where the first electrodes 15 and the second electrodes 18 intersect.

Further, in this embodiment, the metal reflection film 19 which is formed into an isolated rectangular pattern is formed only in each pixel portion. Furthermore, the liquid crystal layer 21 is sealed between the upper substrate 29 and the lower substrate 31 by sealant (not shown). The liquid crystal layer 21 is composed of a super twisted nematic liquid crystal which is aligned at a twist angle of 240°.

Finally, the retardation film 26 and the polarizing film 27 are disposed on the opposite side (the visible side) of the first substrate 11 to the liquid crystal layer 21, thereby completing the reflection-type liquid crystal display device shown in FIG. 1.

Incidentally, the color filter layers 33 are formed directly on the metal reflection films 19 in the conventional fabricating method of the reflection-type liquid crystal display device. Therefore, there is a problem that in the developing process of the color filter layers 33, the aluminum films composing the metal reflection films 19 are exposed within the regions where the color filter layers 33 are developed and corroded by the alkali developing solution.

However, in the above-described fabricating method according to the invention, the anodic oxide films 25 made of aluminum oxide film are formed to cover the entire faces of the metal reflection films 19 before the color filter layers 33 are formed on the metal reflection films 19. This aluminum oxide film is excellent in chemical resistance to the alkali developing solution. Thus, the metal reflection films 19 are never removed in the developing process of the color filter layers 33.

### INDUSTRIAL APPLICABILITY

A reflection-type liquid crystal display device according to the invention is provided with a conductive light absorbing layer on the entire face between the second substrate and the metal reflection films which are arranged to provide gaps between adjacent pixels.

Therefore, incident light reaches the gap between the adjacent pixels is all absorbed by the light absorbing layer, so that the gap between the adjacent pixels can be brought to a state of usually black regardless of phase modulation by the liquid crystal layer.

Accordingly, the light absorbing layer is allowed to function in the same manner as a black matrix even if not patterned with high accuracy between pixels, thereby enabling an excellent black display and a color display with high brightness and high contrast and without mixture of colors, so that a reflection-type liquid crystal display device with high quality can be obtained.

Further, since a transparent anodic oxide film is provided between each metal reflection film and the color filter layer, the metal reflection film is never corroded nor removed by the alkali developing solution in a developing process of the color filter layer, resulting in improved reliability.

Moreover, in the fabricating method of the reflection-type liquid crystal display device according to the invention, the anodic oxide film is formed by anodic oxidation processing of the metal reflection film with the conductive light absorbing layer which is electrically connected to each metal reflection film as a common electrode.

Therefore, even if the pattern forms of the metal reflection films are a plurality of rectangular patterns which are isolated from each other, the anodic oxide films can be formed on the entire faces of all the metal reflection films including side faces, and the metal reflection films are never corroded nor removed from the side faces by the alkali developing solution in the developing process of the color filter layers, with the result that a more reliable reflection-type liquid crystal display device can be obtained.

Accordingly, the reflection-type liquid crystal display device according to the invention can be widely used for a portable device such as a portable phone, an electronic desk calculator, a timepiece, or the like, or display devices of other various kinds of electronic equipment.

## Claims

1. A reflection-type liquid crystal display device, in which
a first substrate (11) composed of an insulating transparent substrate and a second substrate (13) composed of an insulating substrate are opposed to each other with a liquid crystal layer (21) therebetween,
transparent first electrodes (15) are provided on the liquid crystal layer side of the first substrate and transparent second electrodes (18) are provided on the liquid crystal layer side of the second substrate respectively,
a color filter layer (33) is provided on the liquid crystal layer side of the first substrate (11) or the second substrate (13),
a metal reflection film (19) is provided between the second substrate (13) and the color filter layer (33),
a polarizing film (27) is disposed on the opposite side of the first substrate to the liquid crystal layer, and
regions where the first electrodes (15) and the second electrodes (18) overlap in a plane view become pixels,
wherein said metal reflection film (19) is disposed with a gap provided between adjacent pixels,
wherein a conductive light absorbing layer (23) electrically connecting with said metal reflection film (19) is provided between said second substrate (13) and said metal reflection film (19); and
**characterised in that** a transparent anodic oxide film (25) is provided on the entire surface including side face of said metal reflection film (19).

2. The reflection-type liquid crystal display device according to claim 1, wherein said metal reflection film (19) is provided only within regions to be pixels.

3. The reflection-type liquid crystal display device according to claim 1, wherein said metal reflection film (19) is made of aluminum or an aluminum alloy.

4. The reflection-type liquid crystal display device according to claim 1, wherein said conductive light absorbing layer (23) is made of chromium film.

5. A fabricating method of a reflection-type liquid crystal display device, comprising the steps of:
forming a large number of transparent first electrodes (15) in stripe forms on one face of a first substrate (11) composed of an insulating transparent substrate at predetermined spaced gaps;
providing a conductive light absorbing layer (23) on the entire face of at least a display region of one face of a second substrate (13) composed of an insulating substrate;
providing a metal reflection film layer (9) on the entire face on the top of the light absorbing layer (23);
patterning the metal reflection film layer (9) to form a large number of metal reflection films (19) with gaps provided at least between adjacent pixels;
performing anodic oxidation processing for a surface of each of the metal reflection films (19) using the conductive light absorbing layer (23) as a common electrode to form a transparent anodic oxide film (25),
providing a color filter layer (33) respectively on each metal reflection film (19) on which the anodic oxide film (25) is formed;
forming a transparent over coat film (35) on the color filter layer (33);
forming a large number of transparent second electrodes (18) in stripe forms at positions each aligned with the metal reflection films on the over coat film (35) at predetermined spaced gaps;
bonding the first substrate (11) and the second substrate (13) together with the first electrodes (15) and the second electrodes (18) being opposed to each other to intersect each other in a plane view within regions where each of the metal reflection films (19) is provided and a gap being provided therebetween, and sealing a liquid crystal layer (21) in the gap; and
disposing a polarizing film (27) on a face on the opposite side of the first substrate (11) to the liquid crystal layer (21).

6. The fabricating method of the reflection-type liquid crystal display device according to claim 5,
wherein in said step of forming the metal reflection films (19), the metal reflection films are formed such that the films are divided into plural pieces per each pixel region with gaps therebetween; and
wherein in said step of providing the color filter layer (33), color filter layers of different colors (R, G, B) are provided respectively to the plurality of metal reflection films (19) in the same pixel region.

7. The fabricating method of the reflection-type liquid crystal display device according to claim 5, wherein in said step of providing the conductive light absorbing layer (23), a chromium film is provided as the light absorbing layer.

8. The fabricating method of the reflection-type liquid crystal display device according to claim 6, wherein in said step of providing the conductive light absorbing layer (23), a chromium film is provided as the light absorbing layer.

9. The fabricating method of the reflection-type liquid crystal display device according to claim 5, wherein in said step of providing the metal reflection film layer (9), an aluminum layer or an aluminum alloy layer is provided as the metal reflection film layer.

10. The fabricating method of the reflection-type liquid crystal display device according to claim 6, wherein in said step of providing the metal reflection film layer (9) an aluminum layer or an aluminum alloy layer is provided as the metal reflection film layer.

## Patentansprüche

1. Reflexions-Flüssigkristallanzeigevorrichtung, bei der:
ein erstes Substrat (11), welches aus einem isolierenden transparenten Substrat zusammengesetzt ist, und ein zweites Substrat (13), welches sich aus einem isolierenden Substrat zusammensetzt, einander gegenüberliegen mit einer Flüssigkristallschicht (21) dazwischen,
jeweils transparente erste Elektroden (15) auf der Flüssigkristallschichtseite des ersten Substrats bereitgestellt sind und transparente zweite Elektroden (18) auf der Flüssigkristallschichtseite des zweiten Substrats bereitgestellt sind,
eine Farbfilterschicht (33) auf der Flüssigkristallschichtseite des ersten Substrats (11) oder des zweiten Substrats (13) breitgestellt ist,
ein Metallreflexionsfilm (19) zwischen dem zweiten Substrat (13) und der Farbfilterschicht (33) bereitgestellt ist,
ein Polarisationsfilm (27) auf der der Flüssigkristallschicht gegenüberliegenden Seite des ersten Substrats angeordnet ist, und Bereiche, wo die ersten Elektroden (15) und die zweiten Elektroden (18) sich in Draufsicht überlappen, zu Pixeln werden,
wobei der Metallreflexionsfilm (19) angeordnet ist mit einer Lücke, die zwischen benachbarten Pixeln bereitgestellt ist,
wobei eine leitfähige, lichtabsorbierende Schicht (23), die mit dem Metallreflexionsfilm (19) elektrisch verbunden ist, zwischen dem zweiten Substrat (13) und dem Metallreflexionsfilm (19) bereitgestellt ist, und
**dadurch gekennzeichnet, dass** ein transparenter, anodisch oxidierter Film (25) auf der gesamten Oberfläche, einschließlich Seitenflächen, des Metallreflexionsfilms (19) bereitgestellt ist.

2. Reflexions-Flüssigkristallanzeigevorrichtung gemäß Anspruch 1, wobei der Metallreflexionsfilm (19) lediglich innerhalb der Bereiche bereitgestellt ist, die zu Pixeln werden.

3. Reflexions-Flüssigkristallanzeigevorrichtung gemäß Anspruch 1, wobei der Metallreflexionsfilm (19) aus Aluminium oder einer Aluminiumlegierung gefertigt ist.

4. Reflexions-Flüssigkristallanzeigevorrichtung gemäß Anspruch 1, wobei die leitfähige, lichtabsorbierende Schicht (23) aus einem Chromfilm gefertigt ist.

5. Herstellungsverfahren einer Reflexions-Flüssigkristallanzeigevorrichtung mit den Schritten:
Bilden einer großen Anzahl von transparenten ersten Elektroden (15) in Streifenform auf einer Seite eines ersten Substrats (11), das sich aus einem isolierenden transparenten Substrat zusammensetzt, mit vorbestimmten Abstandslücken;
Bereitstellen einer leitfähigen, lichtabsorbierenden Schicht (23) auf der gesamten Fläche wenigstens eines Anzeigebereichs von einer Seite eines zweiten Substrats (13), das aus einem isolierenden Substrat zusammengesetzt ist;
Bereitstellen einer Metallreflexionsfilmschicht (9) auf der gesamten Fläche über der lichtabsorbierenden Schicht (23), Musterbildung der Metallreflexionsfilmschicht (9) zum Bilden einer großen Anzahl von Metallreflexionsfilmen (19) mit Lücken, die mindestens zwischen benachbarten Pixeln bereitgestellt werden; Ausführen eines anodischen Oxidationsprozesses gegenüber einer Oberfläche von jedem der Metallreflexionsfilme (19) unter Verwendung der leitfähigen, lichtabsorbierenden Schicht (23) als einer gemeinsamen Elektrode, zum Bilden eines transparenten, anodisch oxidierten Films (25),
Bereitstellen einer Farbfilterschicht (33) jeweils auf jedem Metallreflexionsfilm (19), auf dem der anodisch oxidierte Film (25) gebildet ist;
Bilden eines transparenten Überzugsfilms (35) auf der Farbfilterschicht (33);
Bilden einer großen Anzahl von transparenten zweiten Elektroden (18) in Streifenform bei Positionen, die jeweils mit den Metallreflexionsfilmen ausgerichtet sind, auf dem Überzugsfilm (35) bei vorbestimmten Abstandslücken;
Aneinanderbinden des ersten Substrats (11) und des zweiten Substrats (13), wobei die ersten Elektroden (15) und die zweiten Elektroden (18) einander gegenüberliegen, um einander in Draufsicht zu schneiden mit Bereichen, wo jeder der Metallreflexionsfilme (19) bereitgestellt ist und eine Lücke dazwischen bereitgestellt ist, und Einschließen einer Flüssigkristallschicht (21) in der Lücke; und
Anordnen eines Polarisationsfilms (27) auf einer Fläche auf der der Flüssigkristallschicht (21) gegenüberliegenden Seite des ersten Substrats (11).

6. Herstellungsverfahren der Reflexions-Flüssigkristallanzeigevorrichtung gemäß Anspruch 5,
wobei im Schritt des Bildens der Metallreflexionsfilme (19) die Metallreflexionsfilme so gebildet werden, dass Filme in viele Stücke pro Pixelbereich mit Lücken dazwischen unterteilt werden; und
wobei im Schritt der Bereitstellung der Farbfilterschicht (33) die Farbfilterschichten von verschiedenen Farben (R, G, B) jeweils auf die Vielzahl von Metallreflexionsfilmen (19) in dem selben Pixelbereich bereitgestellt werden.

7. Herstellungsverfahren der Reflexions-Flüssigkristallanzeigevorrichtung gemäß Anspruch 5, wobei im Schritt der Bereitstellung der leitfähigen, lichtabsorbierenden Schicht (23) ein Chromfilm als die lichtabsorbierende Schicht bereitgestellt wird.

8. Herstellungsverfahren der Reflexions-Flüssigkristallanzeigevorrichtung gemäß Anspruch 6, wobei im Schritt der Bereitstellung der leitfähigen, lichtabsorbierenden Schicht (23) ein Chromfilm als die lichtabsorbierende Schicht bereitgestellt wird.

9. Herstellungsverfahren der Reflexions-Flüssigkristallanzeigevorrichtung gemäß Anspruch 5, wobei im Schritt der Bereitstellung der Metallreflexionsfilmschicht (9) eine Aluminiumschicht oder eine Aluminiumlegierungsschicht als die Metallreflexionsfilmschicht bereitgestellt wird.

10. Herstellungsverfahren der Reflexions-Flüssigkristallanzeigevorrichtung gemäß Anspruch 6, wobei im Schritt der Bereitstellung der Metallreflexionsfilmschicht (9) eine Aluminiumschicht oder eine Aluminiumlegierungsschicht als die Metallreflexionsfilmschicht bereitgestellt wird.

## Revendications

1. Dispositif réfléchissant à cristaux liquides, dans lequel :
un premier substrat (11) composé d'un substrat transparent isolant et un deuxième substrat (13) composé d'un substrat isolant sont placés l'un face à l'autre avec une couche à cristaux liquides (21) interposée entre ceux-ci,
des premières électrodes transparentes (15) sont placées sur le côté vers la couche à cristaux liquides du premier substrat et des deuxièmes électrodes transparentes (18) sont placées sur le côté vers la couche à cristaux liquides du deuxième substrat respectivement,
une couche de filtre coloré (33) est placée sur le côté vers la couche à cristaux liquides du premier substrat (11) ou du deuxième substrat (13),
un film métallique réfléchissant (19) est placé entre le deuxième substrat (13) et la couche de filtre coloré (33),
un film polarisant (27) est disposé sur le côté du premier substrat opposé à la couche à cristaux liquides, et
des régions où les premières électrodes (15) et les deuxièmes électrodes (18) se chevauchent en vue en plan deviennent des pixels,
dans lequel ledit film métallique réfléchissant (19) est disposé en laissant un intervalle entre des pixels adjacents,
dans lequel une couche conductrice d'absorption de lumière (23) reliée électriquement audit film métallique réfléchissant (19) est placée entre ledit deuxième substrat (13) et ledit film métallique réfléchissant (19), et
**caractérisé en ce qu'**un film d'oxyde anodique transparent (25) est placé sur la surface entière comprenant la face latérale dudit film métallique réfléchissant (19).

2. Dispositif réfléchissant à cristaux liquides selon la revendication 1, dans lequel ledit film métallique réfléchissant (19) est placé uniquement dans des régions destinées à devenir des pixels.

3. Dispositif réfléchissant à cristaux liquides selon la revendication 1, dans lequel ledit film métallique réfléchissant (19) est composé d'aluminium ou d'un alliage d'aluminium.

4. Dispositif réfléchissant à cristaux liquides selon la revendication 1, dans lequel ladite couche conductrice d'absorption de lumière (23) est composée d'un film de chrome.

5. Procédé de fabrication d'un dispositif réfléchissant à cristaux liquides, comprenant les étapes consistant à :
former un grand nombre de premières électrodes transparentes (15) en forme de bandes sur une face d'un premier substrat (11) composé d'un substrat transparent isolant à des intervalles prédéterminés ;
placer une couche conductrice d'absorption de lumière (23) sur la surface entière d'au moins une région d'affichage d'une face d'un deuxième substrat (13) composé d'un substrat isolant ;
placer une couche de film métallique réfléchissant (9) sur la surface entière au-dessus de la couche d'absorption de lumière (23) ;
agencer en motifs la couche de film métallique réfléchissant (9) de façon à former un grand nombre de films métalliques réfléchissants (19) en laissant des intervalles au moins entre des pixels adjacents ;
réaliser un traitement d'oxydation anodique sur une surface de chacun des films métalliques réfléchissants (19) en utilisant la couche conductrice d'absorption de lumière (23) comme électrode commune pour former un film transparent d'oxyde anodique (25) ;
placer une couche de filtre coloré (33) respectivement sur chaque film métallique réfléchissant (19) sur lequel le film d'oxyde anodique (25) est formé ;
former un film de revêtement transparent (35) sur la couche de filtre coloré (33),
former un grand nombre de deuxièmes électrodes transparentes (18) en forme de bandes à des positions alignées chacune avec les films métalliques réfléchissants sur le film de revêtement (35) à des intervalles prédéterminés ;
assembler l'un à l'autre le premier substrat (11) et le deuxième substrat (13) avec les premières électrodes (15) et les deuxièmes électrodes (18) placées les unes face aux autres de façon à se croiser en vue en plan dans les régions où chacun des films métalliques réfléchissants (19) est situé et en laissant un interstice entre eux, et enfermer une couche à cristaux liquides (21) dans l'interstice ; et
disposer un film polarisant (27) sur une face sur le côté du premier substrat (11) opposé à la couche à cristaux liquides (21).

6. Procédé de fabrication du dispositif réfléchissant à cristaux liquides selon la revendication 5,
dans lequel, dans ladite étape de formation des films métalliques réfléchissants (19), les films métalliques réfléchissants sont formés de telle manière que les films sont divisés en plusieurs pièces par région formant pixel en laissant des intervalles entre ceux-ci ; et
dans lequel, dans ladite étape de placement de la couche de filtre coloré (33), des couches de filtre coloré de différentes couleurs (R, G, B) sont placées respectivement sur la pluralité de films métalliques réfléchissants (19) dans la même région formant pixel.

7. Procédé de fabrication du dispositif réfléchissant à cristaux liquides selon la revendication 5, dans lequel, dans ladite étape de placement de la couche conductrice d'absorption de lumière (23), un film de chrome est appliqué pour servir de couche d'absorption de lumière.

8. Procédé de fabrication du dispositif réfléchissant à cristaux liquides selon la revendication 6, dans lequel, dans ladite étape de placement de la couche conductrice d'absorption de lumière (23), un film de chrome est appliqué pour servir de couche d'absorption de lumière.

9. Procédé de fabrication du dispositif réfléchissant à cristaux liquides selon la revendication 5, dans lequel, dans ladite étape de placement de la couche de film métallique réfléchissant (9), une couche d'aluminium ou une couche d'alliage d'aluminium est appliquée pour servir de couche de film métallique réfléchissant.

10. Procédé de fabrication du dispositif réfléchissant à cristaux liquides selon la revendication 6, dans lequel, dans ladite étape de placement de la couche de film métallique réfléchissant (9), une couche d'aluminium ou une couche d'alliage d'aluminium est appliquée pour servir de couche de film métallique réfléchissant.
